# EUROPEAN PATENT SPECIFICATION

(11) **EP 0 608 194 B1**
(45) Date of publication and mention of the grant of the patent: **30.08.1995**
(21) Application number: 94500027.1
(22) Date of filing: 16.02.1994
(51) Int. Cl.: B62B 9/20, B62B 7/06

(54) **Locking and unlocking device for the folding of baby carriages**
Ver- und Entriegelungsvorrichtung für das Zusammenklappen von Kinderwagen
Dispositif de verrouillage et déverrouillage pour le pliage des voitures d'enfant

(30) Priority: 18.02.1993 ES 9300487; 11.02.1994 ES 9400255
(43) Date of publication of application: 27.07.1994
(73) Proprietor: JANE S.A., E-08184 Palau de Plegamans (Barcelona) (ES)
(72) Inventor: Jane Cabagnero, Ramon, c/o Jane, S.A., E-08184 Palau de Plegamans (Barcelona) (ES)
(74) Representative: Pastells Teixido, Manuel

(56) References cited:
- EP-A- 0 483 042
- EP-A- 0 494 701

## Description

This invention refers to a locking and unlocking device for the folding of baby carriages.

This device applies mainly to baby carriages which are folded by sliding the handlebar down onto the front feet, and which include between the handlebar and the feet two hook-shaped catches with a lateral unlocking control as can be seen in the folding frame for baby carriages object of the patent P9002663 of the applicant firm.

The objective of this invention is to simplify the unlocking operation,which will be carried out from the handlebar by means of cables.

A characteristic of the design is the positioning of the device control under the middle handlebar section without it being required to remove the central section, this control being concealed inside a cowling fitted on to said handlebar section, the respective parts of the disc-shaped control and a stopping dog which locks same, projecting from both the lateral and top openings of said cowling, these projecting parts enabling the device to be manually operated.

Another characteristic is that the control acts, via a cable, on the lateral hook-shaped catches formed of the two L-shaped hooks hinged at the apex in the handlebar branch, these hooks form at one end a tailpiece through which is connected the corresponding cable and which also joins them to a drag spring which stretches to apply the hooked end of the catches around a pin fixed to the corresponding front foot.

The control consists of a disc to which the cable ends are attached at diametrically opposed points, this disc being clamped along its rim by a disc-shaped stopping dog elastically impelled to its active position. This stopping dog must be unlocked in order to enable the rotation of the disc which is to act on the catches to release them from the feet pins.

The disc-shaped stopping dog is fixed to a spindle which crosses through the handlebar and at the free end finishes in a push-button which projects from the cowling, a spring being strung on the spindle and positioned between the handlebar and the push-button.

The underside of the disc rim is fitted with a housing for the connecting disc-shaped stopping dog, the rim extending into a wing projecting through the cowling via an oblong slot enabling the disc to be manually operated.

Said assembly of the catch hook, on being able the catch to rotate freely on the shaft hingedly it under the handlebar branch makes that at times it becomes out of alignment as relative to an interlocked pin of the corresponding front feet, a thing that may cause failures in the engagement operation of the catch in said pin and also raising a wrong locking of the device which even may cause the breakage of some component or member of the catch unit, including that of the cable when its operation is forced.

To avoid these problems and always achieve a perfect hook engagement on the corresponding pin, it is provided to stabilise the hook at a correctly aligned position with the pin so that the hook advance always effectively drives the pin. All that is achieved by fitting inside the cowling a stop against which the hook is bearing on by its tailpiece, whereby the hook remains always stabilised at its correct position.

These and other characteristics will be more easily understood from the detailed description which follows, further explanation being provided by the accompanying page of drawings showing a practical example of use, intended merely as a non-restrictive illustration of the scope of this invention.

In these drawings:
Figure 1 illustrates an underside and partially sectioned view of the locking device seen from the handlebar to one of the front feet.
Figure 2 shows a side elevation of the hook-shaped catch positioning between the handlebar branch and the corresponding front foot,
Figure 3 shows a front elevation of the locking and unlocking device control.

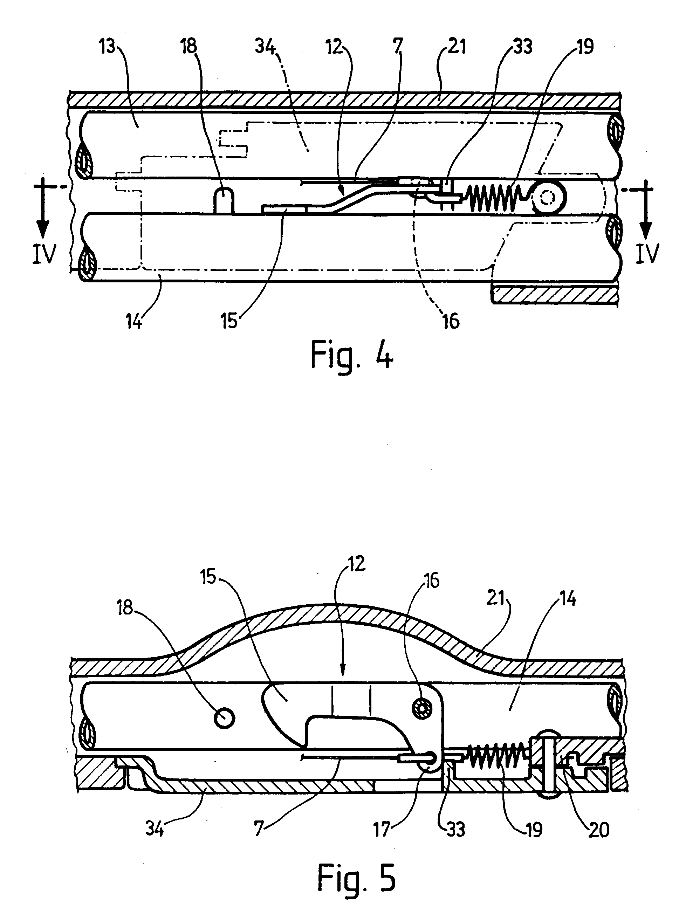

Figure 4 shows a side elevation of the stop arrangement, wherein the catch hook is being leaning to, and
Figure 5 shows said catch and stop as seen in a plan view, according to a longitudinal section to the line IV-IV of figure 4.

As in the drawings the device includes a control consisting of a disc 1 whose rotation is fixed by a shaft 2 underneath the middle section of the U-shaped tubular handlebar 4 of the baby carriage, the two ends of the cables 7 and 8 protected by two sheaths 9 and 10 being attached to said disc at diametrically opposed points 5 and 6, these cables passing through the interior of the handlebar to join up with the hook-shaped catches 12 in each branch 13 of the handlebar which slides over the top end part of the front feet 14, these branches sliding down onto said feet when folding the baby carriage.

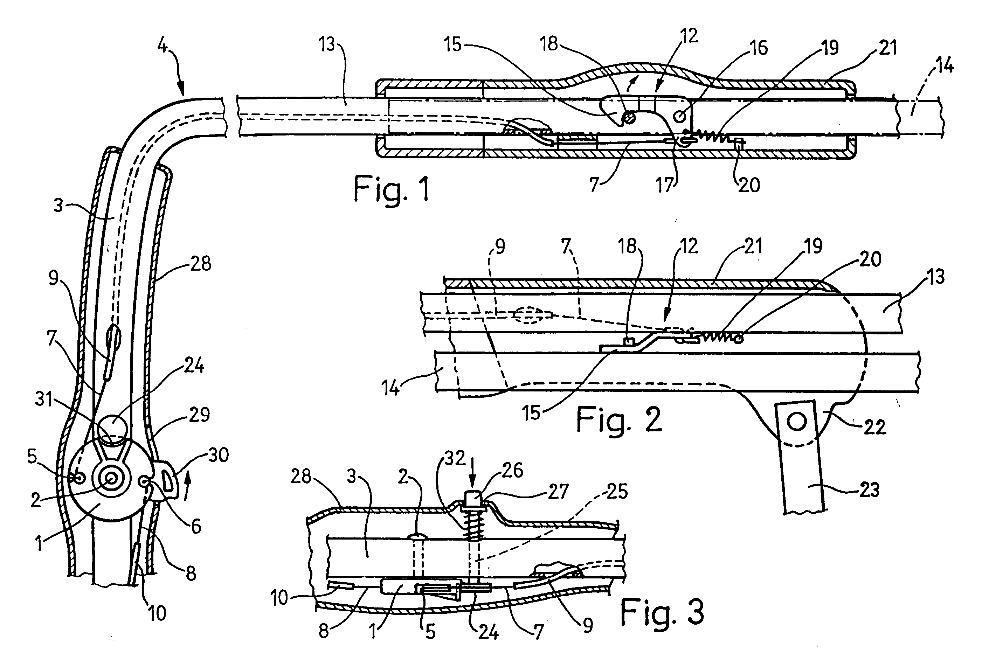

The catch 12 includes an L-shaped hook 15 hinged at the apex by means of shaft 16 under branch 13 of the handlebar, whose hook joins up at its tailpiece 17 with the corresponding cable. The end of hook 15 catches round a pin 18 fixed to the corresponding front foot 14, whose position is maintained by the drag action of a spring 19 which joins the tailpiece 17 to an internal protruding pin 20 of a cowling 21 which covers the upper area of the front feet and which along its underside is open froming lugs 22 where the rear feet 23 of the baby carriage are hinged (figure 2).

The active position of disc-shaped control 1 is maintained by a safety catch consisting of a circular stopping dog 24 fixed to a spindle 25 which crosses through the middle handlebar section 3 and at its free end is topped by a push-button 26 which projects through an orifice 27 on the upper side of a cowling 28 covering said middle handlebar section 3, this cowling presenting a lateral oblong slot 29 through which protrudes a wing 30 extending radially from the disc-shaped control 1 and which rotates same to unlock the catches 12 by pressing the safety catch which moves the circular stopping dog 24 back to a housing 31 fitted on the underside of the disc rim 1. On the spindle 25 is strung a spring 32 positioned between the push-button 26 and the middle handlebar section 3, which stretches to maintain the stopping dog 24 against the disc 1.

The cowling 21 is inwardly having a stop 33 whereto the catch hook is leaning to with its tailpiece 17, whereby said hook remains stabilised at its correct position and aligned with the pin 18 of the foot 14. In this way, in the advance of the hook 15 always will be found the pin 18 in a correct arrangement to be hooked thereinto.

The stop 33 has been provided with a small cap 34 to close a side opening inside the cowling 21, said small cap allowing with its removal, an access to the region of the catch 12 to link the cable to the hook and go to its replacement if required.

## Claims

1. Device for the locking and unlocking of the folding action of baby carriages, in whose folding the handlebar (4) of the baby carriages slides down onto the front feet (14) and whose device is operated from the handlebar by means of cables (7,8) and consists of a hook-shaped catch (12) at each side, the design being characteristic because the device control is fitted underneath the middle section (3) of the handlebar (4) and, by means of cables (7,8),acts on the tailpiece (17) of an L-shaped hook (15) hinged (16) along the apex in the branch (13) of the handlebar (4) and at the far end of the hook (15) catches around a pin (18) fixed to the corresponding foot (14), the tailpiece (17) of said hook (15) being connected to a drag spring (19) which stretches to apply the far end of the hook against said pin (18).

2. Device for the locking and unlocking of the folding action of baby carriages, according to claim 1, in which the device control consists of a disc (1) to which the cable ends (7 and 8) are attached at diametrically opposed points (5 and 6), this disc being clamped along its rim by a disc-shaped stopping dog (24) elastically impelled towards its active position, the disc (1) and stopping dog (24) both having parts which project (30 and 26) through side (29) and top (27) openings, respectively, in a cowling (28) mounted on the central section (3) of the handlebar (4), these parts enabling the disc (1) and stopping dog (24) to be manually operated, it being previously required to unlock the stopping dog (24) in order to be allowed the disc (1) to rotate.

3. Device for the locking and unlocking of the folding action of baby carriages, according to claim 2, in which the stopping dog (24) which locks the disc consists of an active disc-shaped head fixed to a spindle (25) which crosses through the handlebar (4) and which at its free end is topped by a push-button (26) which projects from the cowling (28),being strung on the spindle (25) a spring (32) positioned between the handlebar (4) and the push-button (26).

4. Device for the locking and unlocking of the folding action of baby carriages, according to claim 2 and 3, in which the underside of the rim of disc (1) has a housing (31) for the connecting disc-shaped head (24) of the stopping dog, and whose rim extends into a wing (30) which projects from the cowling (28) through an oblong slot (29) in same in order to manually operate the disc (1).

5. Device for the locking and unlocking of the folding action of baby carriages, according to claim 1, in which the area of the handlebar (4) and the front foot (14) containing the hook-shaped (15) catch (12) is covered with a cowling(28) which is fitted in its interior with a protruding pin (20) which is fixed at the other end to the spring (19) linking up with the hook (15).

6. Device for the locking and unlocking of the folding action of baby carriages, according to claim 5 in which the cowling 21 is inwardly having a stop (33) whereto the catch hook (12) is leaning to with its tailpiece (17) and having the catch stabilised at its correct position aligned with the pin (18) of the foot (14) whereto the pin is to be taken into.

## Patentansprüche

1. Vorrichtung zur Verriegelung und Entriegelung der Zusammenklappvorrichtungen von Kinderwagen, bei deren Zusammenklappen die Lenkstange (4) des Kinderwagens auf den Vorderholmen (14) gleitet und welche Vorrichtung von der Lenkstange vermittels Seilzügen (7, 8) betätigt wird und an jedem Seitenteil eine Sperrklinke (12) beinhaltet, dadurch gekennzeichnet, dass die Betätigung der Vorrichtung unterhalb dem Mittelteil (3) der Lenkstange (4) zum Einbau kommt und durch die Seilzüge (7, 8) auf das Ende (17) eines L-förmigen Sperrkarrens (15) einwirkt, welcher an seinem Scheitelpunkt (16) an der Verlängerung (13) der Lenkstange (4) angelenkt ist und welcher an seinem Hakenende (15) in einen Stift (18) eingreift, welcher an dem entsprechenden Holm (14) befestigt ist, wobei der Haken (15) an seinem Ende (17) an einer Zugfeder (19) angelenkt ist, welche bewirkt, dass das Hakende an dem genannten Stift (18) anliegt.

2. Vorrichtung zur Verriegelung und Entriegelung der Zusammenklappvorrichtung von Kinderwagen gemäss Patentanspruch 1, in welchem die Betätigung der Vorrichtung eine Scheibe (1) beinhaltet, an deren diametral entgegengesetzten Punkten (5 und 6) die Enden der Seilzüge (7, 8) angelenkt sind, welche Scheibe (1) an ihrem Rande durch einen Anschlag (24) blockiert wird, welcher durch eine Feder (32) in seiner Tätigkeitsstellung gehalten wird, wobei die Scheibe (1) und der Anschlag (24) jeweils hervorstehende Teile (30 und 26) aufweisen, welche durch seitliche (29) und obere (27) Oeffnungen hervorstehen, über die Verkleidung (28) herausragen, welche auf dem Mittelteil (3) der Lenkstange (4) aufmontiert ist und welche die Handbetätigung der genannten Scheibe (1) und des Anschlages (24) ermöglichen, so dass der Anschlag (24) zuerst entriegelt werden muss, bevor die Scheibe (1) gedreht werden kann.

3. Vorrichtung zur Verriegelung und Entriegelung der Zusammenklappvorrichtung von Kinderwagen gemäss Patentanspruch 2, in welcher der Anschlag (24) welcher die Scheibe verriegelt, einen scheibenförmigen Aktivkopf beinhaltet, an welchem ein Stab (25) befestigt ist, welcher die Lenkstange (4) durchbohrt und an seinem freien Ende in ein Hütchen (26) endet, welches aus der Verkleidung (28) zu dessen Betätigung hervorsteht, wobei auf dem Stab (25) zwischen der Lenkstange (4) und dem Hütchen (26) eine Feder (32) aufgesteckt ist.

4. Vorrichtung zur Verriegelung und Entriegelung der Zusammenvorrichtung von Kinderwagen, gemäss den Patentansprüchen 2 und 3, an welcher die Scheibe (1) am Umfang ihres unteren Teiles eine Einbuchtung (31) aufweist, in welche der scheibenförmige Kopf (24) des Anschlages einpasst, und aus dessen Umfang ein Flügel (30) durch eine längliche Oeffnung (29) der Verkleidung (28) herausgeführt wird, damit es möglich wird, die Scheibe (1) von Hand zu betätigen.

5. Vorrichtung zur Verriegelung und Entriegelung der Zusammenklappvorrichtung von Kinderwagen, gemäss Patentanspruch 1, in welcher die Zone der Lenkstange (4) und des Vorderholmes (14), in welchem der Haken (15) der Sperrklinke (12) eingebaut ist, durch eine Verkleidung (21) geschützt ist, welche innen einen Vorsprung (20) aufweist, an welchem das andere Ende der Feder (19) befestigt wird, welche an dem Haken (15) angelenkt ist.

6. Vorrichtung zur Verriegelung und Entriegelung der Zusammenklappvorrichtung von Kinderwagen, gemäss Patentanspruch 5, in welcher die Verkleidung (21) innen einen Anschlag (33) aufweist, an welchem sich das Ende (17) des Hakens der Sperrklinke (12) abstützt, so dass diese in ihrer richtigen Stellung mit dem Stift (18) des Holmes (14) fluchtet, an welchem sie angreift.

## Revendications

1. Dispositif de verrouillage et déverrouillage pour le pliage de voitures d'enfant. Au cours du pliage, le guidon (4) de la voiture d'enfant se déplace sur les pieds avant (14), ce dispositif étant actionné depuis le guidon au moyen d'un câble (7, 8), il comporte un cliquet (12) de chaque côté qui est caractérisé par le fait que la commande du dispositif est montée sous le tronçon central (3) du guidon (4) et actionne à travers le câble (7, 8) l'extrémité (17) d'un crochet (15) en L articulé (16) au sommet sur la branche (13) du guidon (4) et qui par son extrémité d'enclenchement (15) s'accroche sur un téton (18) solidaire du pied correspondant (14) dont le crochet (15) est uni par son extrémité (17) à un ressort (19) de traction qui force l'application de l'extrémité d'enclenchement contre ce téton (18).

2. Dispositif de verrouillage et déverrouillage pour le pliage de voitures d'enfant, conformément à la revendication 1. La commande du dispositif comprend un disque (1) où sont accrochées à des points (5 et 6) diamétralement opposés les extrémités des câbles (7, 8). Ce disque (1) est retenu à sa périphérie par une butée (24) repoussée de manière élastique (32) vers sa position active. Ce disque (1) et la butée (24) présentent des saillies (30 et 26) dépassant respectivement des ouvertures latérale (29) et supérieure (27). Ces ouvertures font partie d'un carénage (28) monté sur le tronçon central (3) du guidon (4), qui permettent l'actionnement manuel de ce disque (1) et de la butée (24), cette butée (24) devant d'abord être débloquée pour pouvoir faire tourner le disque (1).

3. Dispositif de verrouillage et déverrouillage pour le pliage de voitures d'enfant, conformément à la revendication 2. La butée (24) qui sert à bloquer le disque comprend une tête active discoïdale solidaire d'une tige (25) qui traverse le guidon (4), dont l'extrémité libre se termine par une calotte (26) qui dépasse du carénage (28) afin de permettre sa pulsation. Sur la tige (25) est enfilé un ressort (32) placé entre le guidon (4) et la calotte (26).

4. Dispositif de verrouillage et déverrouillage pour le pliage de voitures d'enfant, conformément aux revendications 2 et 3. Le disque (1) présente à la partie inférieure sur sa périphérie une échancrure (31) où est accouplée la tête discoïdale (24) de la butée. De son contour sort une ailette (30) qui dépasse du carénage (28) par une ouverture oblongue (29) de celui-ci, permettant d'actionner manuellement le disque (1).

5. Dispositif de verrouillage et déverrouillage pour le pliage de voitures d'enfant, conformément à la revendication 1. La zone du guidon (4) et du pied avant (14) où se trouve le cliquet (12) en forme de crochet (15) est recouverte d'un carénage (21). Ce carénage comporte à l'intérieur une saillie (20) où est fixé par son autre extrémité le ressort (19) attaché au crochet (15).

6. Dispositif de verrouillage et déverrouillage pour le pliage de voitures d'enfant, conformément à la revendication 5. Le carénage (21) comporte à l'intérieur une butée (33) où s'appuie par son extrémité (17) le crochet du cliquet (12), ce qui le stabilise dans sa position correcte en alignement avec le téton (18) du pied (14) où il doit s'accrocher.
